**Europäisches Patentamt**

**European Patent Office**

**Office européen des brevets**

(19)

(11) Veröffentlichungsnummer : **0 154 170**
**B1**

(12) # EUROPÄISCHE PATENTSCHRIFT

(45) Veröffentlichungstag der Patentschrift :
26.04.89

(51) Int. Cl.⁴ : **A 43 B 7/28**

(21) Anmeldenummer : 85101102.3

(22) Anmeldetag : 02.02.85

(54) **Verfahren zum Herstellen von Schuheinlege-Sohlen mit genauer Passform.**

(30) Priorität : 18.02.84 DE 3405964
14.09.84 DE 3437627

(43) Veröffentlichungstag der Anmeldung :
11.09.85 Patentblatt 85/37

(45) Bekanntmachung des Hinweises auf die Patenterteilung : 26.04.89 Patentblatt 89/17

(84) Benannte Vertragsstaaten :
AT CH DE FR GB IT LI SE

(56) Entgegenhaltungen :
DE—A— 3 405 964
US—A— 3 244 177
US—A— 3 641 688
US—A— 3 896 516
US—A— 3 985 853

(73) Patentinhaber : **Keltsch, Bernhard**
**Zum Schwarzebruch 1**
**D-4030 Ratingen (DE)**

(72) Erfinder : **Lutz, Norbert**
**Laufer Strasse 5**
**D-8501 Eckental (DE)**

(74) Vertreter : **Tergau, Enno et al**
**Patentanwälte Tergau & Pohl Postfach 11 93 47**
**Hefnersplatz 3**
**D-8500 Nürnberg 11 (DE)**

EP 0 154 170 B1

## Beschreibung

Die Erfindung betrifft ein Verfahren zum Herstellen von Schuheinlege-Sohlen mit genauer Paßform.

Es ist bekannt, Maßschuhe herzustellen, indem man einen dem Fuß entsprechend abgeänderten Leisten für den Schuh anfertigt. Die Abänderung eines Leistens nach der natürlichen Form des Fußes ist jedoch langwierig und meist nicht ausreichend, um eine genaue Anpassung des Schuhes an die wirkliche Form des Fußes zu gewährleisten.

Des weiteren ist es bekannt, in Serienschuhe oder auch Maßschuhe Schuheinlegesohlen einzufügen, um den Schuh den individuellen Fußformen besonders gut anzupassen. Dabei können, sofern lediglich eine Größenkorrektur beabsichtigt ist, einfache Sohlen, die der Grundrißform des Schuhinnenraumes entsprechen, eingefügt werden, wobei diese aus Strohgeflecht, Leder, Kunststoff oder anderen geeigneten Werkstoffen bestehen können. Des weiteren ist es bekannt, sogenannte orthopädische Schuheinlegesohlen herzustellen und zu verwenden, wobei diese der Form eines gesunden Fußes in besonderer Weise angepaßt sind. Sie verfügen meist über eine starke Anhebung und folglich Stütze im Mittelteil der Sohle sowie auch in vielen Fällen über eine besondere Wulst, die der Zehenhalterung dient. Eine erhebliche Schwierigkeit besteht jedoch darin, eine derartige Schuheinlegesohle den individuellen Gegebenheiten des Fußes anzupassen. Eine solche Anpassung läßt sich nach dem Stande der Technik individuell beispielsweise durch Arbeit des Orthopäden herbeiführen, was jedoch zeitaufwendig und teuer ist und deshalb in den meisten Fällen unterbleibt.

In der US-A 3 896 516 ist ebenfalls ein Verfahren zum Herstellen von Schuheinlegesohlen bzw. von Schuhen mit darin angeordneten Einlegesohlen beschrieben, bei welchem eine genaue Paßform sowie eine möglichst enge Anpassung der Oberfläche der Einlegesohle an die Unterseite des Fußes angestrebt wird. Dazu wird eine Einlegesohle, die beispielsweise aus Polyethylen, Polypropylen oder einem ähnlichen thermoplastischen Werkstoff bestehen soll, in den Schuh eingelegt, vom Fuß des Trägers belastet und dann induktiv auf Erweichungstemperatur erwärmt. Der Fuß bleibt beim Erwärmen im Schuh, so daß sich die plastisch gewordene Einlegesohle der Fußunterseite anpassen kann. Nach einiger Zeit ist die Anpassung vollendet und die Wärmequelle (die Induktionserhitzungsmaschine) wird abgeschaltet. Das Verfahren hat den Nachteil, daß die in Betracht kommenden thermoplastischen Werkstoffe erst bei Temperaturen über 80 °C plastisch verformbar werden und daß diese Temperaturen vom Fuß kaum toleriert werden. In ähnlicher Weise wird auch beim Verfahren gemäß US-A 3 641 688 vorgegangen. Auch dort werden als Werkstoffe für die Innensohle Polyethylen, Polypropylen oder Polyvinylchlorid vorgeschlagen.

Um das induktive Erwärmen der Werkstoffe zu erleichtern, sind kleine Teilchen aus Metallen oder Graphit in die Sohle eingelagert.

Ein weiteres Verfahren zum Aufbau einer Schuhinnenoder -einlegesohle ist in der US-A 3 985 853 beschrieben. Bei diesem Verfahren wird eine die Ferse aufnehmende Vertiefung sowie eine hügelartige Unterstützung für den Mittelfuß sukzessive erzeugt. Es wird hierzu zunächst eine Kunststoffschicht auf die Grundsohle aufgebracht, welche mit dieser einen taschenartigen Hohlraum formt und welche sich an den abzuformenden Fuß eng anlehnt. In die Tasche wird alsdann ein kaltaushärtender Silikonkunststoff in flüssiger Form eingeführt, worauf dieser im Inneren der Form in einigen Minuten aushärtet. Nach dem Ablauf dieser Zeit kann der Fuß entfernt werden, wobei die Sohlenoberfläche ihre Form beibehält. Da bei diesem Verfahren der Kunststoff in flüssiger Form in eigens hergestellte taschenartige Hohlräume eingefüllt werden muß und die Aushärtung eine Zeit von wenigstens 7 Minuten erfordert, ist das Verfahren für den Benutzer relativ umständlich.

Der Erfindung liegt die Aufgabe zugrunde, ein Verfahren zum Herstellen von Schuheinlegesohlen anzugeben, welches jeweils zu optimal den individuellen Gegebenheiten angepaßten Sohlen führt und leicht sowie in kurzer Zeit ausgeführt werden kann. Zur Lösung dieser Aufgabe wird vorgeschlagen, daß die Einlegesohle aus einem bei Raumtemperatur plastischen heiß aushärtbaren, auch nach der Aushärtung elastischen Werkstoff hergestellt wird und nach dem Einformen des Fußabdruckes ohne weitere Belastung durch den Fuß durch Heißreaktion ausgehärtet wird.

Zur Ausführung des Verfahrens kann zunächst ein Paar Einlegesohlen mit ungefährer Paßform aus einem bei Raumtemperatur plastischen heiß aushärtbaren Werkstoff, der auch nach der Aushärtung elastisch bleibt, hergestellt werden. Eine aus solchem Werkstoff hergestellte Einlegesohle wird dann in individuell ausgesuchte Schuhe, also beispielsweise neue oder auch gebrauchte Straßenschuhe, Sportschuhe o. dgl. eingelegt und gegebenenfalls mit einer Stoffsohle, einer Papiersohle o. dgl. abgedeckt. Die Abdeckung dient lediglich dem Zweck, den Fuß, der nun zur Abformung in den Schuh eingeführt wird, vom noch nicht ausreagierten Sohlenwerkstoff zu trennen. Durch das Einführen des Fußes wird der Sohlenwerkstoff belastet und er schmiegt sich in kurzer Zeit (in wenigen Minuten) allen individuellen Formen des Fußes aufs Genaueste an. Ist dieser Zustand erreicht, so kann der Schuh ausgezogen und die vorhandene Einlegesohle durch Heißreaktion ausgehärtet werden. Dabei behält die Sohle ihre Form bei, so daß sich die erstrebte optimale Anpassung ergibt.

Wird ein heiß aushärtender Werkstoff gewählt, so können die Einlegesohlen mit ungefährer Paßform auf Vorrat produziert werden, so daß sich das Verfahren in besonders wirtschaftlicher Weise durchführen läßt.

Im Falle der Verwendung von derartigen heiß aushärtenden Werkstoffen wird die Einlegesohle mit ungefährer Paßform wie folgt hergestellt :

a) Herstellen eines Modelles mit Übermaß an den erhabenen und Untermaß an den flachen Stellen ;

b) Abformen dieses Modelles mit thermoplastischer Tiefzieh-Folie ;

c) Einformen eines warm aushärtbaren, nach dem Aushärten elastischen Werkstoffes in die Form ;

d) Abdecken der gefüllten Form und Abpacken derselben, gegebenenfalls paarweise sowie Bereithalten dieser Halbfabrikate als Verkaufsware.

Als Werkstoff für die Herstellung der Einlegesohlen hat sich besonders elastisch aushärtender Silikon-Kautschuk bewährt. Wird ein solches Material verwendet, so ist es möglich, die Einlegesohlen mit ungefährer Paßform nach den soeben beschriebenen Arbeitsgängen beispielsweise fabrikatorisch auszuführen. Es kann dabei, wie gesagt, von einem Modell ausgegangen werden, welches Übermaß an den erhabenen und Untermaß an den flachen Stellen hat. Dieses Modell kann sodann mit thermoplastischer Tiefziehfolie, beispielsweise Polyethylenfolie, abgeformt werden, wonach die Folienform mit heiß aushärtendem Silikon-Kautschuk gefüllt und paarweise abgepackt wird. Die erzeugte Packung kann beispielsweise in den Schuhhandel geliefert und dort bei Bedarf verwendet werden. Tritt der Verwendungsfall ein, so wird die Form geöffnet, die Rohsohle entnommen, diese in ausgesuchte Schuhe eingeführt und in der beschriebenen Weise abgeformt und schließlich heiß ausgehärtet.

Rein beispielsweise werden für die Durchführung der zuletzt erwähnten Verfahrensvariante Silikon-Kautschuk-Sorten empfohlen, wie sie beispielsweise im französischen Patent 1 453 327 beschrieben sind. Des weiteren können Silikonelastomere angewandt werden, wie sie in der deutschen Auslegeschrift 24 23 531 erwähnt sind und deren Herstellungs-Verfahren dort beschrieben ist. Das Verfahren ist dadurch gekennzeichnet, daß hochviskose Diorganopolysiloxane zunächst mit wenigstens 0,02 Gew.% Verbindungen, die mindestens ein an Silizium direkt oder über Sauerstoff gebundenes Stickstoffatom und mindestens eine Triorganosilylgruppe aufweisen, wobei direkt an ein Stickstoffatom nicht mehr als eine Triorganosilylgruppe und an ein Siliziumatom nicht mehr als eine kondensationsfähige Gruppe gebunden ist und 4-40 Gew.% Hexaorganodisilazanen und dann mit 10-150 Gew.% Siliziumdioxid mit einer Oberfläche von wenigstens 50 m²/g und gegebenenfalls Wasser vermischt werden und nach Bildung einer homogenen Mischung diese Mischung vor der endgültigen Formgebung von flüchtigen Bestandteilen befreit wird.

Besonders empfohlen wird für die Ausführung des erfindungsgemäßen Verfahrens, einen heiß aushärtenden Silikon-Kautschuk zu verwenden, der mit einem Zusatz von blättrigem Graphit versehen ist. Ein derartiger Werkstoff läßt sich durch Mikrowellenbestrahlung, also beispielsweise in einem handelsüblichen Mikrowellenofen, erwärmen und aushärten. Der Werkstoff sollte sogenannten Flocken-Graphit in Mengen von 1-10 Gew.%, vorzugsweise in Mengen von 3-8 Gew.% enthalten. Unter « Flocken-Graphit » wird eine Graphitart verstanden, die aus mehr oder weniger kleinen Blättchen besteht. Es hat sich gezeigt, daß speziell eine solche Graphitart in der Lage ist, die eingestrahlten Mikrowellen genügend zu absorbieren und die dabei entstehende Wärme auf den Kunststoff zu übertragen.

Anstelle von Flocken-Graphit kann aber auch Ruß verwendet werden. Schließlich hat sich gezeigt, daß auch noch andere Stoffe als Umwandlungskatalysatoren für die Mikrowellenenergie in Betracht kommen, nämlich solche Stoffe, die Wasser in gebundener Form enthalten, insbesondere solche, die hygroskopisch sind. Als Beispiele für derartige Stoffe werden Mehl (Getreidemehl) sowie Gips (CaSO₄ . 2H₂0) genannt. Diese Stoffe sollten in Mengen von 3-5 Gew.% - bezogen auf die Menge des Silikon-Kautschukes in der Mischung vorhanden sein.

Die Durchführung des erwähnten Verfahrens wird im folgenden unter Bezugnahme auf die Zeichnung und anhand eines Ausführungsbeispieles erläutert. In der Zeichnung sind die einzelnen Verfahrensschritte schematisch dargestellt. Es zeigen :

Fig. 1 eine vereinfachte perspektivische Darstellung einer orthopädischen Einlegesohle ;

Fig. 2 eine vereinfachte perspektivische Darstellung der abgeformten und mit heiß aushärtender Masse gefüllten Folienverpackung ;

Fig. 3 eine vereinfachte Darstellung eines Schuhs mit eingelegter Sohle und Fuß ;

Fig. 4 eine vereinfachte perspektivische Darstellung der vom Fuß geformten, noch rohen Einlegesohle ;

Fig. 5 eine vereinfachte Darstellung eines Mikrowellenofens mit eingelegter Sohle.

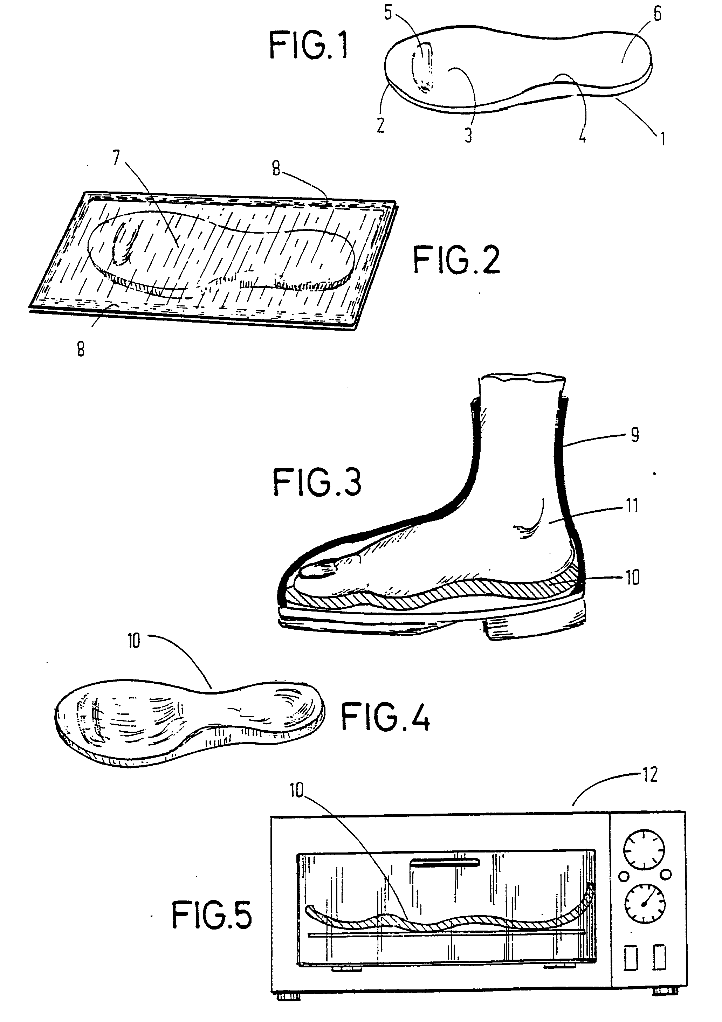

Als Ausgangsprodukt dient der Rohling einer orthopädischen Schuheinlage. Ein derartiger Rohling ist in Fig. 1 dargestellt und als Ganzes mit 1 bezeichnet. Der Rohling (das Modell) besteht aus Kork oder Leder, gegebenenfalls auch aus Kunststoff. Er wird zunächst durch Handarbeit überarbeitet und dabei den Erfordernissen des hier auszuführenden Verfahrens angepaßt. Die Überarbeitung besteht darin, daß die dünnen Stellen, beispielsweise das Vorderteil 2 sowie auch die Vorderfußauflage 3 mittels einer Feile, einer Raspel o. dgl. abgearbeitet wird bis auf eine Materialstärke von etwa 1-2 mm. Andere Stellen, beispielsweise die Mittelfußstütze 4 sowie der sogenannte Zehengreifer 5 werden mit Hilfe einer kalt aushärtenden Kunstharz-Spachtelmasse aufmodelliert. Eine weitere Vertiefung wird im Fersenbereich 6 vorgesehen, wobei alle Modellierungen prinzipiell im Rahmen des Üblichen liegen und nur leicht überzogen sind.

Das so gewonnene Rohmodell wird alsdann in eine beheizbare Vakuumtiefziehvorrichtung eingelegt und mit einer thermoplastischen Tiefziehfolie bedeckt. Diese Folie wird beheizt, wobei sie sich unter dem Einfluß ihres Gewichtes sowie des angelegten Vakuums konturengenau an das überarbeitete Rohmodell 1 anlegt und dieses abformt. Nach dem Wiedererkalten kann das Rohmodell unverändert der nun gebildeten Folienform entnommen und zur Herstellung weiterer Formen verwendet werden. Die Folienform selbst wird mit einem geeigneten Werkstoff gefüllt, beispielsweise mit einem heiß vulkanisierendem Silikon-Kautschuk, welcher im Rohzustand pastös ist. Verwendbar sind beispielsweise die Typen LFC 3963/19 und LFC 3963/20 der Firma Gummiwerk Kraiburg in Waldkraiburg. Vor dem Einfüllen in die Folienform wird dieser Werkstoff mit einem geeigneten Flocken-Graphit versetzt. Geeignet sind beispielsweise die Typen MFL 85/87 RFL 99/5 und NFL 90 der Firma Graphitwerk Kropfmühl. Bewährt hat sich ein Zusatz von 4 Gew.% Graphit zur aushärtungsbereiten Silikonpaste. Die Folienform wird mit dieser Mischung durch Vollspachteln gefüllt, gegebenenfalls mit einem Trennwerkstoff, beispielsweise Wachspapier o. dgl. abgedeckt und es werden dann zwei derartige Formen (entsprechend einem Paar Einlegesohlen) Kopf an Kopf zusammengelegt, wie dies in Fig. 2 dargestellt ist. In Fig. 2 ist die vom Rohmodell abgeformte Form bei 7 zu erkennen. Die thermoplastische Tiefziehfolie steht allseits über diese Form über und bildet einen Rand 8. In dieser Weise verpackt eignet sich das Halbprodukt dazu, in Schuhverkaufsgeschäften als Halbfertigprodukt vorrätig gehalten zu werden.

Im Falle der Benutzung wird die in Fig. 2 dargestellte Verpackung geöffnet und die in die Form 7 eingeformte Masse (zwei Rohformen) werden entnommen. Die Rohformen werden nunmehr je in einen Schuh 9 (siehe Fig. 3) eingelegt. Sie sind in Fig. 3 bei 10 dargestellt. Der Schuh wird alsdann angezogen und vom Fuß 11 belastet. Dabei formen sich alle individuell gegebenen Konturen sauber ab, wobei die in der Rohform enthaltenen Über- und Untermaße durch Verdrängen des Werkstoffes ausgeglichen werden. Die Belastung soll für etwa 3-5 Minuten aufrechterhalten werden, wobei es vorteilhaft ist, leicht hin- und herzugehen. Nach dieser Zeit wird der Schuh wieder ausgezogen, die Rohform 10 entnommen, was in der Zeichnung symbolisch in Fig. 4 dargestellt ist. Die Formstabilität der genannten Werkstoffe reicht aus, um die Rohform in der beschriebenen Weise handhaben zu können. Sie wird alsdann sofort in einen Mikrowellenofen gelegt und je nach Werkstoffzusammensetzung bei Temperaturen ab etwa 85 °C ausgehärtet. Nach Ablauf dieser Zeit wird der Mikrowellenofen abgeschaltet und die fertige Schuheinlegesohle entnommen.

Das beschriebene Verfahren eignet sich für die Anwendung auf beliebige Schuharten. Es wird besonders empfohlen bei krankhaft deformiertem Fuß, der in orthopädisch richtiger Weise durch eine individuell angeformte Sohle unterstützt werden muß. Es kann aber ebenfalls mit Vorteil bei Sportschuhen Verwendung finden und unterstützt insbesondere Hochleistungssportler in vorteilhafter Weise.

**Patentansprüche**

1. Verfahren zum Herstellen von Schuheinlegesohlen mit genauer Paßform, bei welchem eine deformierbare Einlegesohle mit ungefährer Paßform im Innern des Schuhes durch Eindrücken des Fußes diesem angeformt und der Eindruck durch Wärmebehandlung fixiert wird, dadurch gekennzeichnet, daß die Einlegesohle aus einem bei Raumtemperatur plastischen, heiß aushärtbaren, auch nach der Aushärtung elastischen Werkstoff hergestellt wird und nach dem Einformen des Fußabdruckes ohne weitere Belastung durch den Fuß durch Heiß-Reaktion ausgehärtet wird.

2. Verfahren nach Anspruch 1, dadurch gekennzeichnet, daß die Einlege-Sohlen mit ungefährer Paßform wie folgt hergestellt werden:
   a) Herstellen eines Modelles mit Übermaß an den erhabenen und Untermaß an den flachen Stellen;
   b) Abformen dieses Modelles mit thermoplastischer Tiefzieh-Folie;
   c) Einformen eines warm aushärtbaren nach dem Aushärten elastischen Werkstoffes in die Form;
   d) Abdecken der gefüllten Form, gegebenenfalls paarweise und Bereithalten als Verkaufsware.

3. Verfahren nach Anspruch 1 oder 2, dadurch gekennzeichnet, daß als Werkstoff für die Herstellung der Einlege-Sohlen elastisch aushärtender Silikon-Kautschuk verwendet wird.

4. Verfahren nach Anspruch 3, dadurch gekennzeichnet, daß als Werkstoff für die Herstellung der Einlege-Sohlen durch Wärmebehandlung elastisch aushärtender Silikon-Kautschuk mit einem Zusatz von blättrigem Graphit verwendet und die Wärmebehandlung durch Mikrowellenbestrahlung durchgeführt wird.

5. Verfahren nach Anspruch 4, dadurch gekennzeichnet, daß der Werkstoff 1-10 Gew.% sogenannten Flocken-Graphit enthält.

6. Verfahren nach Anspruch 5, dadurch gekennzeichnet, daß der Werkstoff 3-8 Gew.% sogenannten Flocken-Graphit enthält.

7. Verfahren nach Anspruch 1 oder 2, dadurch gekennzeichnet, daß als Werkstoff eine warm aushärtende elastisch bleibende Zweikomponentenmasse verwendet wird.

8. Verfahren nach Anspruch 1 oder 2, dadurch gekennzeichnet, daß der Silikon-Kautschuk mit einem Zusatz eines solchen Stoffes versehen ist, der Wasser in chemisch gebundener Form enthält.

9. Verfahren nach Anspruch 8, dadurch gekennzeichnet, daß der Zusatzstoff hygroskopisch ist.

10. Verfahren nach Anspruch 8 oder 9, dadurch gekennzeichnet, daß der Silikon-Kautschuk 1-10 Gew.%, vorzugsweise 3-5 Gew.% des Zusatzstoffes enthält.

11. Verfahren nach Anspruch 8, dadurch gekennzeichnet, daß der Zusatzstoff Mehl (Getreidemehl) ist.

12. Verfahren nach Anspruch 8, dadurch gekennzeichnet, daß der Zusatzstoff Gips ist.


## Claims

1. A method of producing shoe insoles having an exact fit, by which a deformable insole with approximate fit is formed inside the shoe by the pressure of the foot so that it precisely conforms to the sole of the foot, and the impression is cured by applying heat, wherein the insole is made of a material which is plastically deformable at room temperature, hot-curable, elastically deformable in a cured state, and which, after conforming to the foot impression, is hot-cured without further pressure being exerted by the foot.

2. A method as defined in claim 1, wherein the insoles with approximate fit are manufactured as follows :

a) Making a pattern which is over-sized at raised portions and under-sized at flat portions ;

b) making a mold of the pattern with a thermoplastic deep-drawing film ;

c) working a hot-curable material, which is elastically deformable in a cured state, into the mold ;

d) covering the filled mold, in pairs if desired, and placing it in stock as a marketable article.

3. A method as defined in claim 1 or 2, wherein said material for making the insole is an elastically-curing silicone rubber.

4. A method as defined in claim 3, wherein said material for making the insole is a thermosetting, elastically curing silicone rubber with an additive of foliated graphite and hot-curing is effected by microwave irradiation.

5. A method as defined in claim 4, wherein said material contains 1-10 % by weight of flake graphite.

6. A method as defined in claim 5, wherein said material contains 3-8 % by weight of flake graphite.

7. A method as defined in claim 1 or 2, wherein said material is a thermosetting two-component substance which is permanently elastic in cured state.

8. A method as defined in claim 1 or 2, wherein said silicone rubber contains an additive containing water in bound form.

9. A method as defined in claim 8, wherein said additive is hygroscopic.

10. A method as defined in claim 8 or 9, wherein said silicone rubber contains 1-10 % by weight, preferably 3-5 % by weight, of the additive.

11. A method as defined in claim 8, wherein said additive is flour (grain flour).

12. A method as defined in claim 8, wherein said additive is gypsum.


## Revendications

1. Procédé de fabrication de première ayant la propriété de chausser parfaitement, dans lequel une première déformable ayant la propriété de chausser approximativement, se trouvant à l'intérieur de la chaussure, est conformée au pied par la pression de celui-ci exercée sur la première, et dans lequel cette impression est durcie à chaud, caractérisé par le fait que la première est fabriquée d'un matériau déformable plastiquement déformable à température ambiante, durcissable à chaud, déformable élastiquement après le durcissement, et qui, après avoir été conformé à l'empreinte, est durci à chaud sans être chargé par le pied.

2. Procédé selon la revendication 1, caractérisé par le fait que les premières ayant la propriété de chausser approximativement, sont fabriquées comme suit :

a) Fabrication d'un modèle avec surmesure dans les parties épaisses et sous-mesure dans les parties plates ;

b) fabrication d'un moule à partir de ce modèle avec une feuille thermoplastique d'emboutissage profond ;

c) moulage dans ce moule d'un matériau durcissable à chaud et, après le durcissement, élastique ;

d) recouvrement du moule rempli, éventuellement par paires, et emmagasinage en tant que produit de vente.

3. Procédé selon l'une des revendications 1 et 2, caractérisé par le fait que le dit matériau pour la fabrication des premières est du caoutchouc silicone qui durcit élastiquement.

4. Procédé selon la revendication 3, caractérisé par le fait que le dit matériau pour la fabrication des premières est du caoutchouc silicone qui durcit à chaud élastiquement, avec un additif de graphite lamelleux, et que le durcissement à chaud s'effectue à l'aide d'irradiation de microondes.

5. Procédé selon la revendication 4, caractérisé par le fait que le dit matériau contient 1-10 % en poids de graphite en flocons.

6. Procédé selon la revendication 5, caractérisé par le fait que le dit matériau contient 3-8 % en poids de graphite en flocons.

7. Procédé selon l'une des revendications 1 et 2, caractérisé par le fait que le dit matériau est une substance à deux composants thermodurcissable et d'élasticité permanente en état durci.

8. Procédé selon l'une des revendications 1 et 2, caractérisé par le fait que le dit caoutchouc silicone contient un additif contenant de l'eau fixée.

9. Procédé selon la revendication 8, caractérisé par le fait que le dit additif est hygroscopique.

10. Procédé selon l'une des revendications 8 et 9, caractérisé par le fait que le dit caoutchouc silicone contient 1-10 % en poids, de préférence 3-5 % en poids, de l'additif.

11. Procédé selon la revendication 8, caractérisé par le fait que le dit additif est de la farine (farine de céréales).

12. Procédé selon la revendication 8, caractérisé par le fait que le dit additif est du gypse.

FIG.1

FIG.2

FIG.3

FIG.4

FIG.5